# EUROPÄISCHE PATENTSCHRIFT

(11) **EP 0 641 113 B1**
(45) Veröffentlichungstag und Bekanntmachung des Hinweises auf die Patenterteilung: **09.02.2000**
(21) Anmeldenummer: 94202347.4
(22) Anmeldetag: 18.08.1994
(51) Int. Cl.: H04M 7/00

(54) **Kennzeichenumsetzer mit Schutzschaltung**
Converter for identification with a protection circuit
Convertisseur pour l'identification à circuit protecteur

(30) Priorität: 19.08.1993 DE 4327922
(43) Veröffentlichungstag der Anmeldung: 01.03.1995
(73) Patentinhaber: LUCENT TECHNOLOGIES INC., Murray Hill, New Jersey 07974-0636 (US)
(72) Erfinder: Hache, Wilfried, Dipl.-Phys., D-20097 Hamburg (DE); Kawczyk, Jost, Dipl.-Ing., D-20097 Hamburg (DE)
(74) Vertreter: Buckley, Christopher Simon Thirsk

(56) Entgegenhaltungen:
- DD-A- 135 964
- DD-A- 277 157
- DE-A- 2 845 393
- US-A- 4 720 845

## Beschreibung

Die Erfindung bezieht sich auf einen Kennzeichenumsetzer zum Verarbeiten von vermittlungstechnischen Informationen mit einer Schutzschaltung zur Begrenzung eines in einer Fernsprechvermittlungsader fließenden Stromes.

Ein Kennzeichenumsetzer wird benötigt, um analoge Vermittlungsstellen an eine PCM-Übertragungsstrecke (Puls-Code-Modulation) anzukoppeln. Der Kennzeichenumsetzer setzt analoge vermittlungstechnische Kennzeichen (Gleichstromzeichen) in digitale Kennzeichen um und dient ebenfalls zur Umwandlung von digitalen in analoge vermittlungstechnische Kennzeichen.

Ein derartiger Kennzeichenumsetzer ist aus der Siemens Zeitschrift 49, Heft 7, Seiten 466 - 472 bekannt. Die Fernsprechvermittlungsadern, d. h. die Sprechadern a und b sowie die Belegungsader c, sind mit nicht näher erläuterten Schutzschaltungen des Kennzeichenumsetzers verbunden, um die elektronischen Schaltungen des Kennzeichenumsetzers vor Überspannungen und Überlastungen zu schützen (s. Seite 469). Eine Überlastung bzw. ein unzulässig hoher Strom treten beispielsweise bei unbeabsichtigter direkter Berührung der Fernsprechvermittlungsadern mit den Leitungen der Amtsstromversorgung auf.

Eine Überspannungsschutzschaltung für eine Teilnehmeranschlußschaltung, bei der ein schwellwertbestimmendes Schaltelement in Form einer Thyristordiode parallel zur Teilnehmeranschlußschaltung verbunden ist und mit dem anderen Auschluß geerdet ist, wird z.B. in der US-A-4 720 845 beschrieben.

Der Erfindung liegt die Aufgabe zugrunde, einen Kennzeichenumsetzer der eingangs genannten Art anzugeben, der durch eine Schutzschaltung gegen Überlast geschützt ist.

Diese Aufgabe wird dadurch gelöst, daß die Schutzschaltung des Kennzeichenumsetzers eine Auswerteschaltung enthält, welche ein Öffnen eines in Reihe zur Fernsprechvermittlungsader angeordneten Schalters bewirkt, wenn ein aus diesem Strom abgeleitets Signal einen Schwellwert erreicht.

Die erfindungsgemäße Ausgestaltung eines Kennzeichenumsetzers erfordert eine Auswerteschaltung und Mittel, die den Strom in der Vermittlungsader in ein verarbeitbares Signal umwandeln und dieses mit einen Schwellwert vergleichen. Der schaltungstechnische Aufwand wird in vorteilhafter Weise auf ein Minimun begrenzt. Der in Reihe zur Fernsprechvermittlungsader angeordnete Schalter ist geschlossen und stromdurchlässig, wenn ein Gespräch zu übertragen ist und kein Fehlerfall vorliegt. Er ist geöffnet und damit stromundurchlässig, wenn kein Gespräch zu übertragen ist oder ein Fehlerfall vorliegt.

In einer Ausgestaltung der Erfindung enthält die Auswerteschaltung einen Komparator, an dessen einem Eingang eine Schwellenspannung und an dessem anderen Eingang eine aus dem Strom in der Fernsprechvermittlungsader abgeleitete Spannung anliegen.

Der Komparator ist ein einfaches Mittel, ein aus dem Strom in einer Fernsprechvermittlungsader abgeleitetes Signal durch Vergleich mit einer als Schwellwert dienenden Schwellenspannung in eine Spannung umzuwandeln, die nur zwei Werte annehmen kann. Die zwei Ausgangsspannungswerte des Komparators stehen für einen zulässigen und einen unzulässig hohen Strom in der Fernsprechvermittlungsader. Diese Spannung ist leicht weiter zu verarbeiten.

In einer weiteren Ausgestaltung der Erfindung ist in Reihe zum Schalter ein erster Widerstand angeordnet, dessen Spannung am Eingang der Auswerteschaltung anliegt.

Der Widerstand dient als Meßwiderstand und wandelt den ihn durchfließenden Strom, der aus dem Strom in der Fernsprechvermittlungsader abgeleitet ist, in eine leichter verarbeitbare Spannung um.

Der erfindungsgemäße Kennzeichenumsetzer wird weiterhin dadurch ausgestaltet, daß ein Mikroprozessor Teil der Auswerteschaltung ist. Insbesondere ist der Mikroprozessor auch für andere Funktionen des Kennzeichenumsetzers vorgesehen.

Mit Hilfe des Mikroprozessors, der den oben beschriebenen Schalter ansteuert, läßt sich die Funktion der Auswerteschaltung leicht variieren. So kann mit Hilfe eines Mikroprozessors beispielsweise auf einfache Weise realisiert werden, daß der Schalter nur bei einem Fehlerstrom geöffnet wird, der länger als ein festzusetzender minimaler Zeitraum andauert. So wird vermieden, daß eine Fernsprechverbindung auf Grund eines nur für sehr kurze Zeit fließenden Fehlerstromes unterbrochen wird. Vorteilhaft ist weiterhin, daß ein Mikroprozessor verwendet wird, der regelmäßiger Bestandteil des Kennzeichenumsetzers ist. Ein zusätzlicher Aufwand an elektronischen Bauelementen ist somit nicht erforderlich.

In einer anderen Ausgestaltung der Erfindung liegt eine von der Auswerteschaltung erzeugte Steuerspannung an der Reihenschaltung eines zweiten Widerstandes, einer Diode und eines dritten Widerstandes an, der Verbindungspunkt von zweiten Widerstand und Diode ist mit dem Steuereingang des durch mindestens einen Bipolartransitor realisierten Schalters gekoppelt und der erste Widerstand ist auf der der Fernsprechvermittlungsader abgewandeten Seite der Schaltstrecke des Schalters angeordnet und der Verbindungspunkt von ersten Widerstand und Schaltstrecke ist mit dem Steuereingang des Schalters gekoppelt.

Auf diese Weise wird sichergestellt, daß auch für nur kurze Zeit fließende Fehlerströme in der Fernsprechvermittlungsader, die kein Öffnen des Schalters und damit eine Unterbrechung des Stromflusses bewirken, in ihrer Größe beschränkt sind und die elektronischen Bauelemente des Kennzeichenumsetzers nicht beschädigen können. Die Spannung am Eingang des Schalters kann einen einstellbaren Grenzwert nicht erreichen, so daß der Strom durch den ersten Widerstand und damit auch der Strom durch die Fernsprechvermittlungsader begrenzt wird.

Die Erfindung wird nachstehend anhand der Zeichnungen näher erläutert.
Fig. 1 zeigt eine digitale und eine analoge Vermittlungsstelle mit zwischengeschalteter PCM-Übertragungsstrecke,
Fig. 2 zeigt eine Schutzschaltung eines Kennzeichenumsetzers.

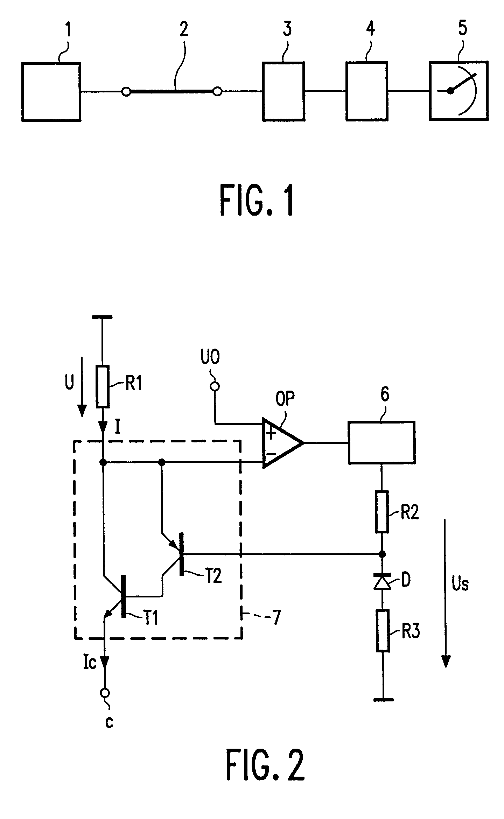

In Fig. 1 ist eine digitale Vermittlungsstelle 1 dargestellt, die über eine PCM-Übertragungsstrecke 2 mit einer analogen Vermittlungsstelle 5 verbunden ist. Die analoge Vermittlungsstelle 5 ist über einen Kennzeichenumsetzer 4 und einen Multiplexer/Demultiplexer 3 mit der Übertragungstrecke 2 gekoppelt. Der Kennzeichenumsetzer 4 dient unter anderem zum Umsetzen der digitalen aus dem Multiplexer/Demultiplexer 3 kommenden vermittlungstechnischen Kennzeichen in analoge vermittlungstechnische Kennzeichen (Gleichstromzeichen), die der analogen Vermittlungsstelle 5 zugeführt werden. Die Umsetzung von analogen in digitale vermittlungstechnische Kennzeichen in entgegengesetzter Richtung wird ebenfalls von Kennzeichenumsetzer 4 durchgeführt. Die analogen zwischen dem Kennzeichenumsetzer 4 und der Vermittlungsstelle 5 ausgetauschten vermittlungstechnischen Kennzeichen sind Gleichstromzeichen. Sie werden über die Fernsprechvermittlungsadern, das heißt die Sprechadern a und b sowie die Belegungsader c, übertragen.

Die in Fig. 2 dargestellte Schaltungsanordnung ist eine Schutzschaltung, die im Kennzeichenumsetzer 4 angeordnet ist und diesen vor Überströmen schützt. Es ist ein Schalter 7 vorgesehen, der aus einer Komplementär-Darlington-Schaltung mit einem ersten NPN-Transistor T1 und einem zweiten PNP-Transistor T2 besteht. Der Kollektor und der Emitter von T1 sind Anschlüsse des steuerbaren Schalters 7. Der Emitter von T1 ist mit einer Fernsprechvermittlungsader - das ist in diesem Fall die Belegungsader c - verbunden. Der Kollektor des ersten Transistors T1 und der Emitter des zweiten Transistors T2 sind mit einem Widerstand R1 verbunden, dessen anderer Anschluß auf Massepotential (hier 0 V) liegt. Die Basis von T1 ist an den Kollektor von T2 angeschlossen, wobei die Basis von T2 dem Steuereingang des Schalters 7 entspricht. Weiterhin sind der Kollektor von T1 und der mit ihm gekoppelte Emitter von T2 mit dem invertierenden Eingang eines Operationsverstärkers OP verbunden, an dessen nichtinvertierendem Eingang eine Schwellenspannung U0 anliegt. Das Ausgangssignal des Operationsverstärker OP wird einem Mikroprozessor 6 zugeführt, der als zentrale Recheneinheit des Kennzeichenumsetzers 4 dient. Der Mikroprozessor erzeugt gegenüber dem Massepotential eine Steuerspannung Us, die an der Reihenschaltung eines zweiten Widerstandes R2, einer Diode D und eines dritten Widerstandes R3 anliegt. Der Widerstand R2 liegt zwischen dem die Steuerspannung Us erzeugenden Ausgang des Mikroprozessors 6 und der Basis des zweiten Transistors T2, die gleich dem Steuereingang des Schalters 7 ist. Die Reihenschaltung der Diode D mit dem dritten Widerstand R3 liegt zwischen der Basis von T2 und dem Massepotential, wobei die Kathode der Diode D mit der Basis von T2 verbunden ist. Die Diode D bewirkt vorteilhaft eine Kompensation einer Temperaturabhängigkeit des Schalters 7.

Liegt kein zu übertragendes Gespräch bzw. keine Belegung der Fernsprechverbindung vor, liefert der Mikroprozessor 6, der für diesen Fall keine Daten zu verarbeiten hat, eine Steuerspannung von 0 V. Damit ist der aus den Transistoren T1 und T2 bestehende Schalter 7 geöffnet und T1 und T2 sind nicht leitend. In die Belegungsader c kann kein Belegungstrom Ic hineinfließen. Am Emitter von T1 bzw. an der Belegungsader c liegt eine Leerlaufspannung an, die gleich der von der Amtsstromversorgung gelieferten Amtsversorgungsspannung (- 60 V) ist.

Bei Belegung der Fernsprechverbindung liefert der Mikroprozessor 6 eine Steuerspannung mit Low-Potential (-5 V). Der aus den Transistoren T1 und T2 bestehende Schalter 7 wird geschlossen bzw. T1 und T2 werden leitend. Jetzt kann ein Belegungsstrom Ic in die Belegungsader c hineinfließen. Damit fließt auch durch den ersten Widerstand R1 ein Strom I, der einen Spannungsabfall U an R1 bewirkt. Am Emitter des ersten Transistors T1 liegt nun ein Potential an, das nur wenig kleiner als das Massepotential ist. Im vorliegenden Fall liegen ungefähr -2 V an.

Bei einem beispielhaften Fehler liegt eine nicht beabsichtigte direkte Berührung einer Leitung der Amtsstromversorgung, die eine Spannung von -60 V aufweist, mit der Belegungsader c vor. Am Emitter des ersten Transistors T1 liegt damit die Amtsversorgungsspannung (-60 V) an und ohne Schutzschaltung würde der Belegungsstrom Ic so stark ansteigen, daß eine Zerstörung des ersten Transistors T1 unvermeidlich wäre. Dies wird jedoch durch die vorliegende Schaltung verhindert. Beim Ansteigen des Belegungsstromes Ic steigt auch der Strom I durch den als Meßwiderstand dienenden Widerstand R1 und damit die am Widerstand R1 anliegende Spannung U. Überschreitet die am invertierenden Eingang des Operationsverstärkers OP anliegende Spannung U die Schwellenspannung U0, so wird die Ausgangsspannung des Operationsverstärkers OP, der als Komparator dient, invertiert. Ist die Spannung U gleich der Schwellenspannung U0, so fließt ein gerade noch zulässiger Belegungsstrom Ic. Liegt die Spannung U für eine gewisse Zeitspanne, die von der Belastbarkeit des ersten Transistors T1 abhängig ist, betragsmäßig über der Schwellenspannung U0, liefert der Mikroprozessor 6 nicht mehr eine Steuerspannung von -5 V sondern von 0 V. Damit wird der aus den Transistoren T1 und T2 bestehende Schalter 7 geöffnet und damit der Stromfluß in die Belegungsader c unterbrochen. Der Fehlerfall wird durch eine an einer Steckbaugruppe des Kennzeichenumsetzers befindliche Anzeigevorrichtung angezeigt. An dieser Steckbaugruppe ist ebenfalls eine Betätigungsvorrichtung vorgesehen, die regelmäßiger Bestandteil eines Kennzeichenumsetzers ist und die zum manuellen Wiederbelegen der Fernsprechverbindung nach Beseitigung des zum oben beschriebenen Fehlerzustand führenden Fehlers dient.

Auch bei geschlossenem und damit leitenden Schalter 7 ist bei dieser Schaltung eine Begrenzung des in die Belegungsader c fließenden Stromes Ic gegeben, so daß auch bei nur kurz andauernden Fehlerströmen, bei denen der Mikroprozessor 6 noch nicht für ein Öffnen des Schalters 7 sorgt, eine Zerstörung des ersten Transistors T1 ausgeschlossen ist. Liegt wie im oben beschriebenen Fehlerfall die Amtsversorgungsspannung direkt an der Belegungsader c an (Absinken der Spannung von ca. -2 V auf -60 V), so bewirkt dies ein Absinken der an der Basis des zweiten Transistors T2 anliegenden negativen Spannung. Da die Spannung an der Basis-Emitter-Strecke von T2 (ca. 0,7 V) nahezu konstant ist, steigt die Spannung U und damit der Strom I durch den ersten Widerstand R1, was wiederum ein Ansteigen des Belegungsstromes Ic bewirkt. Allerdings steigt auch der Basisstrom des zweiten Transistors T2 an, der gleich dem über die Emitter-Basis-Strecke von T2 abfließendem Anteil des Stromes I ist. Der über den Widerstand R2 fließende Basisstrom von T2 ist in diesem Fall nicht vernachlässigbar klein und bewirkt eine Erhöhung der Spannung an R2 bzw. eine Erhöhung des negativen Potentials an der Basis von T2. Dies wirkt einem Anstieg des aus dem Schalter 7 herausfließenden Belegungsstromes Ic entgegen, so daß Ic begrenzt wird. Durch geeignete Wahl der Widerstände R1, R2 und R3 kann die beschriebene Begrenzung des Belegungsstromes Ic eingestellt werden.

## Patentansprüche

1. Kennzeichenumsetzer zum Verarbeiten von vermittlungstechnischen Informationen mit einer Schutzschaltung zur Begrenzung eines in einer Fernsprechvermittlungsader (c) fließenden Stromes (Ic),
dadurch gekennzeichnet,
daß die Schutzschaltung eine Auswerteschaltung (OP, 6) enthält, welche ein Öffnen eines in Reihe zur Fernsprechvermittlungsader (c) angeordneten Schalters (7) bewirkt, wenn ein aus diesem Strom (Ic) abgeleitetes Signal (U) einen Schwellwert (U0) erreicht.

2. Kennzeichenumsetzer nach Anspruch 1,
dadurch gekennzeichnet,
daß die Auswerteschaltung (OP, 6) einen Komparator (OP) enthält, an dessen einem Eingang eine Schwellenspannung (U0) und an dessen anderem Eingang eine aus dem Strom (Ic) in der Fernsprechvermittlungsader (c) abgeleitete Spannung (U) anliegen.

3. Kennzeichenumsetzer nach Anspruch 1 oder 2,
dadurch gekennzeichnet,
daß in Reihe zum Schalter (7) ein erster Widerstand (R1) angeordnet ist, dessen Spannung (U) am Eingang der Auswerteschaltung (OP, 6) anliegt.

4. Kennzeichenumsetzer nach einem der Ansprüche 1 bis 3,
dadurch gekennzeichnet,
daß ein Mikroprozessor (6), der insbesondere auch für andere Funktionen des Kennzeichenumsetzers vorgesehen ist, Teil der Auswerteschaltung (OP, 6) ist.

5. Kennzeichenumsetzer nach einem der Ansprüche 1 bis 4,
dadurch gekennzeichnet,
daß eine von der Auswerteschaltung (OP, 6) erzeugte Steuerspannung (Us) an der Reihenschaltung eines zweiten Widerstandes (R2), einer Diode (D) und eines dritten Widerstandes (R3) anliegt,
daß der Verbindungspunkt von zweitem Widerstand (R2) und Diode (D) mit dem Steuereingang des durch mindestens einen Bipolartransistor (T1, T2) realisierten Schalters (7) gekoppelt ist und
daß der erste Widerstand (R1) auf der der Fernsprechvermittlungsader (c) abgewandten Seite der Schaltstrecke des Schalters (7) angeordnet und der Verbindungspunkt von erstem Widerstand (R1) und Schaltstrecke mit dem Steuereingang des Schalters (7) gekoppelt ist.

## Claims

1. Signalling converter for processing switching information having a protection circuit for limiting a current (Ic) flowing in a telephone switching line (c), characterized in that the protection circuit contains an evaluation circuit (OP, 6) which causes a switch (7) arranged in series with the telephone switching line (c) to open if a signal (U) derived from this current (Ic) reaches a threshold value (U0).

2. Signalling converter according to Claim 1, characterized in that the evaluation circuit (OP, 6) contains a comparator (OP) at one input of which a threshold voltage (U0) is present and at whose other input a voltage (U) derived from the current (Ic) in the telephone switching line (c) is present.

3. Signalling converter according to Claim 1 or 2, characterized in that a first resistor (R1), whose voltage (U) is present at the input of the evaluation circuit (OP, 6), is arranged in series with the switch (7).

4. Signalling converter according to one of Claims 1 to 3, characterized in that a microprocessor (6), which is in particular also provided for other functions of the signalling converter, is part of the evaluation circuit (OP, 6).

5. Signalling converter according to one of Claims 1 to 4, characterized in that a control voltage (Us) generated by the evaluation circuit (OP, 6) is present at the series circuit of a second resistor (R2), a diode (D) and a third resistor (R3), in that the connection point between the second resistor (R2) and the diode (D) is connected to the control input of the switch (7) which is implemented by means of at least one bipolar transistor (T1, T2), and in that the first resistor (R1) is arranged on the contact gap side of the switch (7) facing away from the telephone switching line (C), and the connection point between the first resistor (R1) and the contact gap is connected to the control input of the switch (7).

## Revendications

1. Convertisseur d'identification pour le traitement d'informations techniques de communication avec un circuit de protection pour limiter un courant (Ic) circulant dans une ligne téléphonique (c), caractérisé en ce que le circuit de protection contient un circuit d'évaluation (OP, 6), qui actionne l'ouverture d'un interrupteur (7) placé en série dans la ligne téléphonique (c) lorsqu'un signal (U), qui dérive de ce courant (Ic), atteint une valeur de seuil (U0).

2. Convertisseur d'identification selon la revendication 1, caractérisé en ce que le circuit d'évaluation (OP, 6) contient un comparateur (OP), auquel on applique sur l'une des entrées une tension de seuil (U0) et sur l'autre entrée une tension (U) dérivée du courant (Ic) dans la ligne téléphonique (c).

3. Convertisseur d'identification selon la revendication 1 ou 2, caractérisé en ce qu'une première résistance (R1) est disposée en série avec l'interrupteur (7), sa tension (U) étant appliquée a l'entrée du circuit d'évaluation (OP, 6).

4. Convertisseur d'identification selon l'une des revendications 1 à 3, caractérisé en ce qu'un microprocesseur (6), qui est surtout prévu aussi pour d'autres fonctions du convertisseur d'identification, fait partie du circuit d'évaluation (OP, 6).

5. Convertisseur d'identification selon l'une des revendications 1 à 4, caractérisé en ce qu'une tension (Us), générée par le circuit d'évaluation (OP, 6), est appliquée au circuit série constitué d'une deuxième résistance (R2), d'une diode (D) et d'une troisième résistance (R3), en ce que le point de raccordement de la deuxième résistance (R2) et de la diode (D) est accouplé à l'entrée de commande de l'interrupteur (7) réalisé au moyen d'au moins un transistor bipolaire (T1, T2), et en ce que la première résistance (R1) est disposée du côté de la ligne téléphonique (c) du circuit de commutation de l'interrupteur (7) et le point de raccordement de la première résistance (R1) et du circuit de commutation est accouplé avec l'entrée de commande de l'interrupteur (7).
